# EUROPEAN PATENT APPLICATION

(11) **EP 3 664 225 A1**
(43) Date of publication of application: **10.06.2020**
(21) Application number: 19173472.2
(22) Date of filing: 09.05.2019
(51) Int. Cl.: H01R 13/44, H01R 11/28, H01R 13/621

(54) **HIGH-CURRENT CONNECTOR**

(30) Priority: 05.12.2018 CN 201811479476
(71) Applicant: Yueging Bada Optical-Electrical Technology Co., Ltd., Yueqing, Zhejiang (CN); Contemporary Amperex Technology Co., Ltd., Ningde, Fujian (CN)
(72) Inventor: WU, Changrong, Yueqing, Zhejiang (CN); CHEN, Xue, Yueqing, Zhejiang (CN); LI, Huanle, Yueqing, Zhejiang (CN)
(74) Representative: Grünecker Patent- und Rechtsanwälte PartG mbB

(57) **Abstract**

The present application relates to a high-current connector, comprising an input portion and an output portion. The input portion comprises a first shell, an input contact and a fastener. A connecting hole is formed on the input contact. The output portion comprises a second shell, an output contact and a connecting base. The output contact is sheathed on the connecting base. When the input portion and the output portion are connected, one end of the fastener passes through the connecting hole to be fixed to the connecting base, while the other end thereof is limited onto the first shell or the input contact. The input contact is conductively connected to the output contact. The input portion and the output portion are connected by screws and nuts in an over-locking manner, so it is easy to mount, both the material and space are saved, and it is ensured that the input portion and the output portion will not become loose during the vehicle vibration. Moreover, the high-current connector is small in size and has an IPXXB anti-electric shock function in the case of a large carrier current. The output direction of the connection can be arbitrarily adjusted by 360° as required.

## Description

### Cross reference to related application

The present application claims the priority of Chinese Patent Application NO.201811479476.2, filed on December 5, 2018, the disclosure of which is incorporated by reference herein in its entirety.

### Technical Field

The present application relates to a connector and in particular to a high-current connector.

### Background

Existing battery packs for new energy automobiles are limited in overall size, and the layout space for internal modules is small. However, existing high-voltage and high-current connectors are used outside the battery packs, and require a large mounting space and a large operation space, so these connectors cannot meet the internal requirements of the battery packs.

As for the existing connectors for battery modules in the battery packs, an output pole of a module is directly connected to an output copper bay by a screw, so that the mounting is troublesome and no anti-electric shock function is provided. Therefore, during the battery assembly, the worker is likely to touch the output positive pole of a module without the anti-electric shock function, resulting in an electric shock risk. High-current connectors with the anti-electric shock function are complex in structure and high in cost.

The output direction of majority of the existing connectors is fixed, so the output direction of the connectors cannot be arbitrarily adjusted by 360° as required.

### Summary

A technical problem to be solved by the present application is to overcome the deficiencies of the prior art and provide a high-current connector.

Main technical solutions of the high-current connector provided by the present application will be described below.

The high-current connector includes an input portion and an output portion, wherein the input portion includes a first shell, an input contact and a fastener, with a connecting hole being formed on the input contact; the output portion includes a second shell, an output contact and a connecting base, with the output contact being sheathed on the connecting base; when the input portion and the output portion are connected, one end of the fastener passes through the connecting hole to be fixed to the connecting base, while the other end thereof is limited onto the first shell or the input contact; and, the input contact is conductively connected to the output contact.

A groove is formed in a middle portion of the connecting base, and internal threads are provided inside the groove; the fastener includes a rod body on which external threads are provided; and the rod body passes through the connecting hole to be in threaded connection to the connecting base.

A first limiting cap is provided at one end of the rod body, while an insulating cap is provided at the other end thereof; and, the first limiting cap is limited onto the first shell or the input contact, and the end where the insulating cap is provided passes through the connecting hole.

A convex column is provided in the center of an end face of an end of the rod body away from the first limiting cap, the diameter of the convex column is less than that of the rod body, the insulating cap is sheathed on the convex column, and the outer diameter of the insulating cap is not greater than the diameter of the rod body.

The input portion further includes a main circuit copper bar that is conductively connected to the input contact; and, a first mounting port is formed at a position on the first shell corresponding to the first limiting cap, and a first cover plate is disposed over the first mounting port.

The aperture of the connecting hole is the same as the diameter of the rod body, and internal threads fitted with the external threads on the rod body are provided on an inner wall of the connecting hole.

The connecting base includes a barrel body; a second limiting cap is provided at one end of the barrel body, while an insulating ring is sheathed on the other end thereof; and, the second limiting cap is limited onto the second shell or the output contact, and the end where the insulating ring is provided passes through the output contact.

An outer edge of the insulating ring is protruded from an end face of the barrel body.

The connecting base is in threaded connection to the output contact.

The output portion further includes an output copper bar that is conductively connected to the output contact.

The high-current connector provided by the present application has the following technical effects.
1. The input portion and the output portion are connected by screws and nuts in an over-locking manner, so it is easy to mount, both the material and space are saved, and it is ensured that the input portion and the output portion will not become loose during the vehicle vibration.
2. The high-current connector is small in size and has an IPXXB anti-electric shock function in the case of a large carrier current.
3. The output direction of the connection can be arbitrarily adjusted by 360° as required.

### Brief Description of the Drawings

Fig. 1 is a structure diagram of a high-current connector according to an embodiment of the present application;
Fig. 2 is a structure diagram of an input portion of the high-current connector according to an embodiment of the present application;
Fig. 3 is a structure diagram of an output portion of the high-current connector according to an embodiment of the present application;
Fig. 4 is an exploded view of the input portion of the high-current connector according to an embodiment of the present application;
Fig. 5 is an exploded view of the output portion of the high-current connector according to an embodiment of the present application;
Fig. 6 shows a first connection mode of the high-current connector according to an embodiment of the present application; and
Fig. 7 shows a second connection mode of the high-current connector according to an embodiment of the present application;
   in which:
   1: input portion; 11: first shell; 111: first cover plate; 12: input contact; 13: fastener; 131: rod body; 132: first limiting cap; 133: convex column; 14: insulating cap; 15: main circuit copper bar; 2: output portion; 21: second shell; 211: second cover plate; 22: output contact; 23: connecting base; 231: barrel body; 232: second limiting cap; 24: insulating ring; 25: output copper bar; 3: main circuit input end; and, 4: battery module.

### Detailed Description

The present application will be described below in detail by embodiments with references to the accompanying drawings. It is to be pointed out that the described embodiments are merely for understanding the present application, rather than limiting the present application.

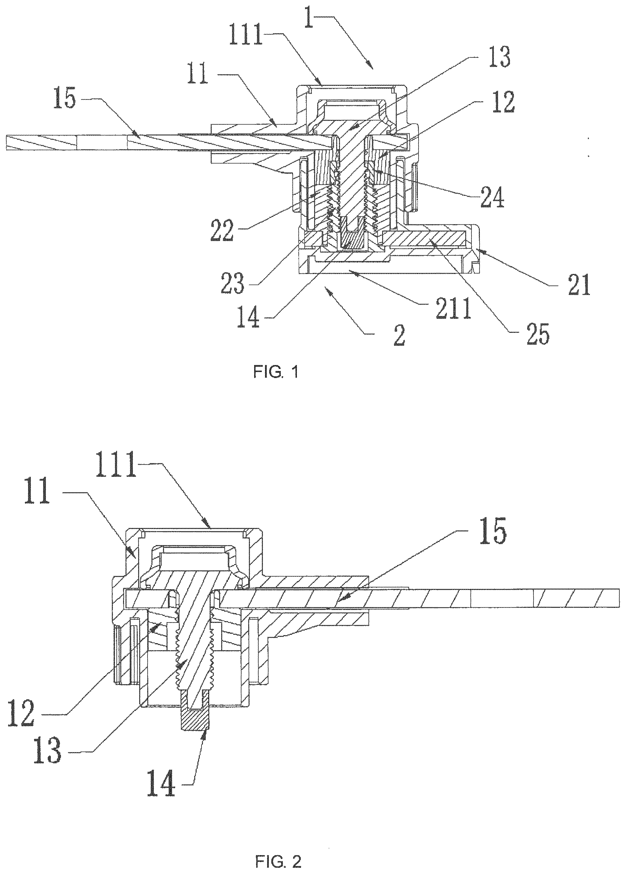

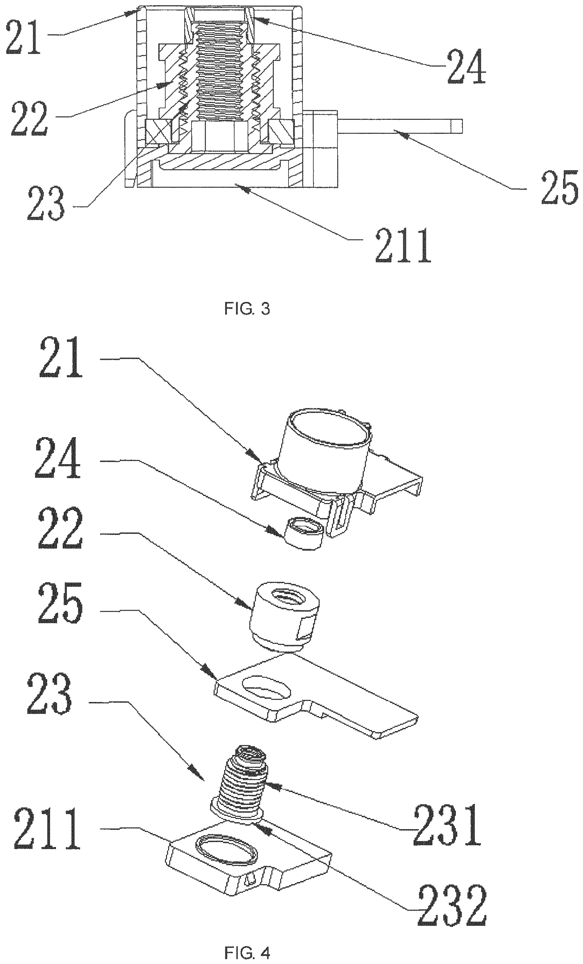

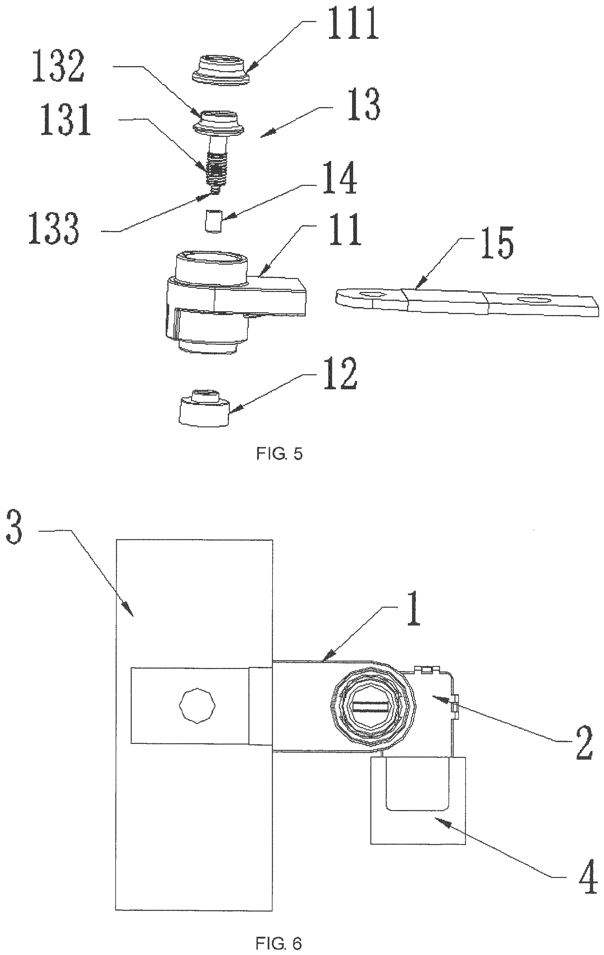

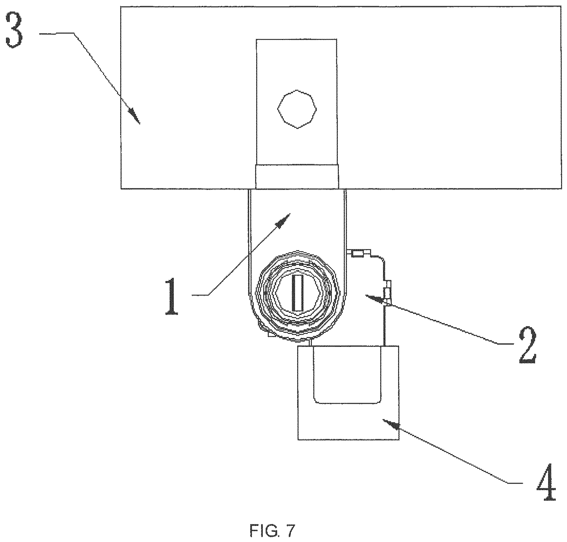

As shown in Figs. 1-7, this embodiment provides a high-current connector, including an input portion 1 and an output portion 2. The input portion 1 includes a first shell 11, an input contact 12 and a fastener 13. A connecting hole is formed on the input contact 12. The output portion 2 includes a second shell 21, an output contact 22 and a connecting base 23. The output contact 22 is sheathed on the connecting base 23. When the input portion and the output portion are connected, one end of the fastener 13 passes through the connecting hole to be fixed to the connecting base 23, while the other end thereof is limited onto the first shell 11 or the input contact 12. The input contact 12 is conductively connected to the output contact 22.

In this way, the input portion and the output portion are connected and fixed internally, so the size is reduced and the mounting space is saved. Since the internal structures are arranged in a penetration manner or in a sheathed manner, the output direction of the connector can be arbitrarily adjusted by 360° as required.

The fastener 13 and the connecting base 23 may be connected by clipping, threaded connection or in other ways. Preferably, the threaded connection is used. A groove is formed in a middle portion of the connecting base 23, and internal threads are provided inside the groove. The fastener 13 includes a rod body 131 on which external threads are provided. The rod body passes through the connecting hole to be in threaded connection to the connecting base. In this way, the connection mode is simple, firm and difficult to damage, it is easy to assemble and disassemble, and the tightness degree during mounting can be controlled according to the distance, so that no loosening is ensured.

A first limiting cap 132 is provided at one end of the rod body 131, while an insulating cap 14 is provided at the other end thereof. The first limiting cap 132 is limited onto the first shell 11 or the input contact 12, and the end where the insulating cap 14 is provided passes through the connecting hole.

A convex column 133 is provided in the center of an end face of an end of the rod body 131 away from the first limiting cap 132. The diameter of the convex column is less than that of the rod body. The insulating cap is sheathed on the convex column, and the outer diameter of the insulating cap is not greater than the diameter of the rod body. In this way, an IPXXB anti-electric shock function is provided in the case of a large carrier current. The IPXXB anti-electric shock function is also provided on the basis of transporting a 400A large current, so the safety of the assembler is ensured.

The input portion 1 further includes a main circuit copper bar 15 that is conductively connected to the input contact 12. Preferably, the input contact 12 is pressed into the main circuit copper bar by rivet-pressing.

A first mounting port is formed at a position on the first shell 11 corresponding to the first limiting cap 132, and a first cover plate 111 is disposed over the first mounting port.

The aperture of the connecting hole is the same as the diameter of the rod body, and internal threads fitted with the external threads on the rod body are provided on an inner wall of the connecting hole.

The connecting base 23 includes a barrel body 231. A second limiting cap 232 is provided at one end of the barrel body, while an insulating ring 24 is sheathed on the other end thereof. The second limiting cap is limited onto the second shell or the output contact, and the end where the insulating ring is provided passes through the output contact. An outer edge of the insulating ring is protruded from an end face of the barrel body. In this way, an IPXXB anti-electric shock function is provided in the case of a large carrier current. The IPXXB anti-electric shock function is also provided on the basis of transporting a 400A large current, so the safety of the assembler is ensured.

The connecting base is in threaded connection to the output contact.

The output portion further includes an output copper bar 25 that is conductively connected to the output contact. Preferably, the output contact is pressed into the output copper bar by rivet-pressing.

A second mounting port is formed at a position on the second shell corresponding to the second limiting cap, and a second cover plate is disposed over the second mounting port.

The forgoing embodiment is merely one of preferred implementations of the present application. Any general alteration and replacement made by those skilled in the art without departing from the scope of the technical solutions of the present application shall fall into the protection scope of the present application.

## Claims

1. A high-current connector comprising an input portion and an output portion; the input portion comprises a first shell, an input contact and a fastener, with a connecting hole being formed on the input contact; the output portion comprises a second shell, an output contact and a connecting base, with the output contact being sheathed on the connecting base; when the input portion and the output portion are connected, one end of the fastener passes through the connecting hole to be fixed to the connecting base, while the other end thereof is limited onto the first shell or the input contact; and, the input contact is conductively connected to the output contact.

2. The high-current connector according to claim 1, wherein a groove is formed in a middle portion of the connecting base, and internal threads are provided inside the groove; the fastener comprises a rod body on which external threads are provided; and the rod body passes through the connecting hole to be in threaded connection to the connecting base.

3. The high-current connector according to claim 2, wherein a first limiting cap is provided at one end of the rod body, while an insulating cap is provided at the other end thereof; and, the first limiting cap is limited onto the first shell or the input contact, and the end where the insulating cap is provided passes through the connecting hole.

4. The high-current connector according to claim 3, wherein a convex column is provided in the center of an end face of an end of the rod body away from the first limiting cap, the diameter of the convex column is less than that of the rod body, the insulating cap is sheathed on the convex column, and the outer diameter of the insulating cap is not greater than the diameter of the rod body.

5. The high-current connector according to claim 4, wherein the input portion further comprises a main circuit copper bar that is conductively connected to the input contact; and
a first mounting port is formed at a position on the first shell corresponding to the first limiting cap, and a first cover plate is disposed over the first mounting port.

6. The high-current connector according to claim 5, wherein the aperture of the connecting hole is the same as the diameter of the rod body, and internal threads fitted with the external threads on the rod body are provided on an inner wall of the connecting hole.

7. The high-current connector according to claim 2, wherein the connecting base comprises a barrel body; a second limiting cap is provided at one end of the barrel body, while an insulating ring is sheathed on the other end thereof; and, the second limiting cap is limited onto the second shell or the output contact, and the end where the insulating ring is provided passes through the output contact.

8. The high-current connector according to claim 7, wherein an outer edge of the insulating ring is protruded from an end face of the barrel body.

9. The high-current connector according to claim 8, wherein the connecting base is in threaded connection to the output contact.

10. The high-current connector according to claim 9, wherein the output portion further comprises an output copper bar that is conductively connected to the output contact; and
a second mounting port is formed at a position on the second shell corresponding to the second limiting cap, and a second cover plate is disposed over the second mounting port.
